# DEMANDE DE BREVET EUROPEEN

(11) **EP 1 732 087 A2**
(43) Date de publication de la demande: **13.12.2006**
(21) Numéro de dépôt: 06120020.0
(22) Date de dépôt: 19.06.2003
(51) Int. Cl.: G21K 1/06

(54) **Ensemble optique et dispositif associé**

(30) Priorité: 19.06.2002 FR 0207546; 21.01.2003 FR 0300623
(62) Demande divisionnaire de: 03760756.1
(71) Demandeur: Xenocs, 38360 Sassenage (FR)
(72) Inventeur: Hoghoj, Peter, 38360 Sassenage (FR); Dariel, Aurélien, 38250 Saint Nizier du Moucherotte (FR); Rodrigues, Sergio, 38340 Voreppe (FR)
(74) Mandataire: Collin, Jérôme

(57) **Abrégé**

La présente invention concerne un ensemble optique réflectif multicouche (10) à gradient latéral dont la surface réfléchissante est destinée à réfléchir des rayons X incidents sous faible angle d'incidence en produisant un effet optique bidimensionnel, caractérisé par le fait que ladite surface réfléchissante est constituée d'une surface unique, ladite surface réfléchissante étant conformée selon deux courbures correspondant à deux directions différentes.

La présente invention concerne également un procédé de fabrication d'un tel ensemble optique, caractérisé en ce que le procédé comprend le revêtement d'un substrat présentant déjà une courbure, et la courbure de ce substrat selon une deuxième direction différente.

L'invention concerne enfin un dispositif de génération et de conditionnement de rayons X pour des applications de réflectométrie RX dispersive en angle comprenant un ensemble optique tel que mentionné ci-dessus couplé à une source rayons X de telle sorte que les rayons X émis par la source sont conditionnés en deux dimensions afin d'adapter le faisceau émis par la source à destination d'un échantillon, les rayons X ayant des angles d'incidences différents sur l'échantillon considéré.

## Description

La présente invention concerne de manière générale les ensembles optiques réflectifs multicouches à gradient latéral destinés à réfléchir des rayons X sous faible angle d'incidence.

On précise que par « faible angle d'incidence » on entend des angles d'incidence inférieurs à une valeur de l'ordre de 10° (l'angle d'incidence étant défini par rapport à la surface réfléchissante).

Plus précisément, l'invention concerne un ensemble optique réflectif multicouche à gradient latéral dont la surface réfléchissante est destinée à réfléchir des rayons X incidents sous faible angle d'incidence en produisant un effet optique bidimensionnel.

L'invention concerne également un procédé de réalisation d'un tel ensemble optique.

Et l'invention concerne également la génération et le conditionnement de rayons X dans le cadre d'applications de réflectométrie RX dispersive en angle.

Par « effet optique bidimensionnel » on entend un effet optique utilisant deux directions différentes de l'espace.

Il peut par exemple s'agir d'une focalisation sur un point (à partir d'une source ponctuelle), ou d'une collimation, d'un faisceau dont les rayons ne sont parallèles dans aucune direction de l'espace (faisceau conique divergent par exemple).

Et pour produire un tel effet bidimensionnel, on peut combiner deux effets optiques monodimensionnels.

On peut par exemple focaliser un faisceau divergent issu d'une source ponctuelle selon une première direction (c'est à dire focaliser un tel faisceau divergent sur une ligne de focalisation, et non sur un point unique), et focaliser également le faisceau selon une deuxième direction, perpendiculaire à la première direction, pour réellement focaliser le faisceau résultant sur un point image unique.

Comme on l'a dit ci-dessus, l'invention trouve une application dans la génération et le conditionnement de rayons X dans le cadre d'applications de réflectométrie RX dispersive en angle.

D'autres applications (non limitatives) de l'invention concernent la génération de rayons X, des applications analytiques des rayons X telles que la diffraction, la diffraction de cristaux, la cristallographie de protéines, l'analyse de textures, la diffraction de films minces, la mesure de contraintes, la réflectométrie, la fluorescence rayons X.

On précise qu'on donnera par ailleurs dans ce texte une définition du « gradient latéral ».

On connaît déjà des ensembles optiques du type mentionné ci-dessus.

On connaît ainsi par le document US 6 041 099 des ensembles optiques multicouches du type miroirs de Montel, qui peuvent être utilisés pour altérer les caractéristiques optiques de rayons X incidents en créant un effet optique bidimensionnel.

Ce type d'optique est une variante du schéma optique dit Kirkpatrick-Baez traditionnel qui consiste à aligner deux miroirs non solidaires, courbés suivant deux directions perpendiculaires, pour créer un effet optique bidimensionnel.

Suivant une évolution de cette configuration, les optiques décrites dans le document US 6 041 099 sont accolées suivant une configuration en regard ("dispositif Kirkpatrick-Baez side by side") et présentent un revêtement multicouche.

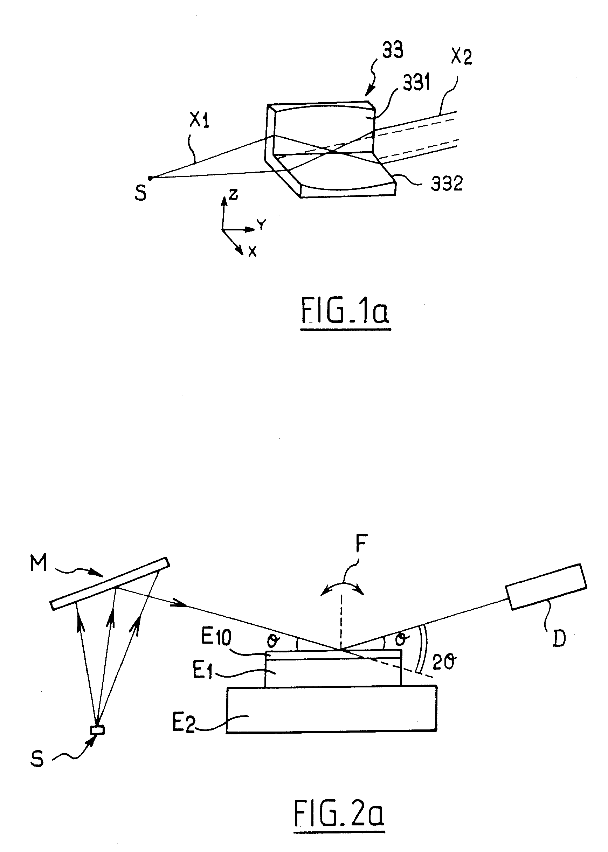

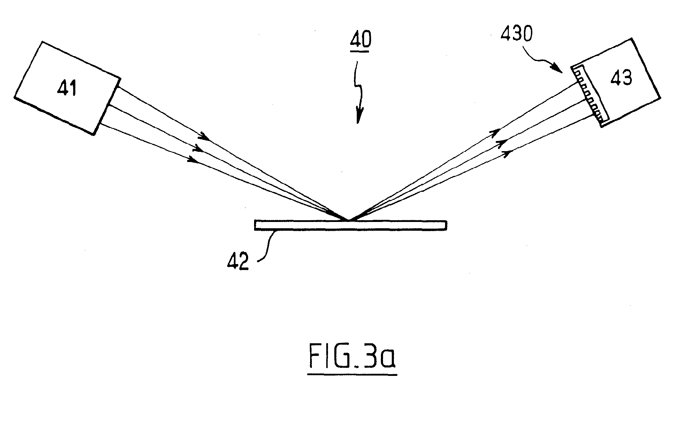

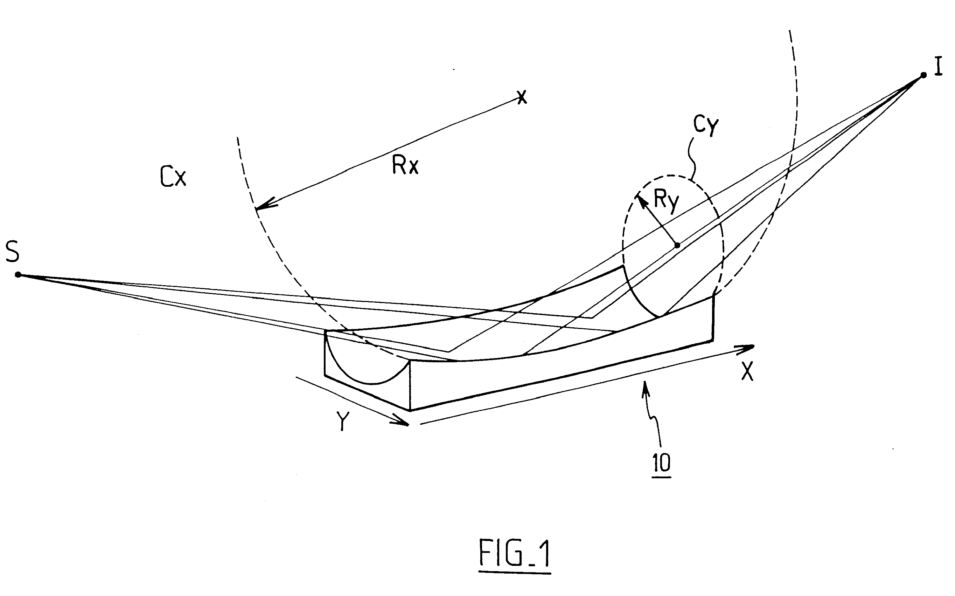

La figure 1a représente un tel ensemble optique 33, qui comporte deux miroirs 331, 332 accolés en regard l'un de l'autre, les surfaces de ces deux miroirs présentant des courbures centrées sur deux axes perpendiculaires l'un à l'autre.

On précise que dans ce texte les figures relatives à l'état de la technique sont référencées avec un indice « a ».

Une limitation de ces ensembles optiques KB "en regard" (l'acronyme KB étant utilisé pour désigner le terme Kirkpatrick-Baez) découle précisément du fait qu'ils sont constitués de deux éléments distincts accolés (deux miroirs élémentaires ayant chacun une surface propre à produire un effet optique monodimensionnel, ces deux effets optiques se superposant pour produire l'effet optique bidimensionnel désiré).

Il est en effet nécessaire d'assembler ces miroirs élémentaires avec une grande précision, ce qui correspond à une opération délicate.

De plus, dans ces ensembles optiques les rayons incidents subissent deux réflexions pour produire les deux effets optiques monodimensionnels - une réflexion sur chaque miroir élémentaire - ce qui entraîne des pertes d'intensité.

Un but de l'invention est de permettre de réaliser des ensembles optiques tels que mentionnés en introduction de ce texte, et qui ne soient pas affectés par les inconvénients mentionnés ci-dessus.

Par ailleurs, un aspect de l'invention concerne la mise en oeuvre de tels ensembles optiques pour des applications de réflectométrie RX dispersive en angle.

Dans une telle application, un faisceau incident de rayons-X est conditionné sur un échantillon à analyser de telle manière que les rayons-X incidents aient une gamme d'angles d'incidence θ sur l'échantillon considéré (au niveau de la tache image) de l'ordre de quelques degrés.

L'analyse de l'intensité des rayons-X réfléchis en fonction de l'angle d'incidence θ permet de déterminer des caractéristiques telles que l'épaisseur, la structure, la densité ou la rugosité interfaciale d'un film mince de matériau présent sur l'échantillon.

Il s'agit ainsi de réaliser des mesures R(θ), où R est la réflectivité mesurée et θ l'angle d'incidence des rayons X arrivant sur l'échantillon.

Une telle application concerne notamment l'analyse de films minces pour l'industrie de la microélectronique.

La technique de réflectométrie RX est alors en effet particulièrement efficace pour l'analyse de couches très minces (typiquement inférieure à 50 nm) par rapport à des techniques dites optiques telles que par exemple l'ellipsométrie (technique très répandue dans l'industrie des semiconducteurs pour les contrôles d'épaisseurs et de structures des matériaux diélectriques).

Il est connu de réaliser des mesures de réflectométrie RX en mettant en oeuvre différents types d'équipements, et selon différentes méthodes.

Selon un premier type de méthode connu, la dispersion des incidences des rayons du faisceau arrivant sur l'échantillon est obtenue par le déplacement d'éléments mobiles du dispositif de mesure.

Selon une première variante de ce premier type de méthode, on effectue les mesures R(θ) en utilisant une source de rayons-X et un monochromateur plan, la dispersion en angle étant obtenue en faisant pivoter l'échantillon autour d'un axe perpendiculaire à la surface de l'échantillon et à la direction de propagation des rayons-X.

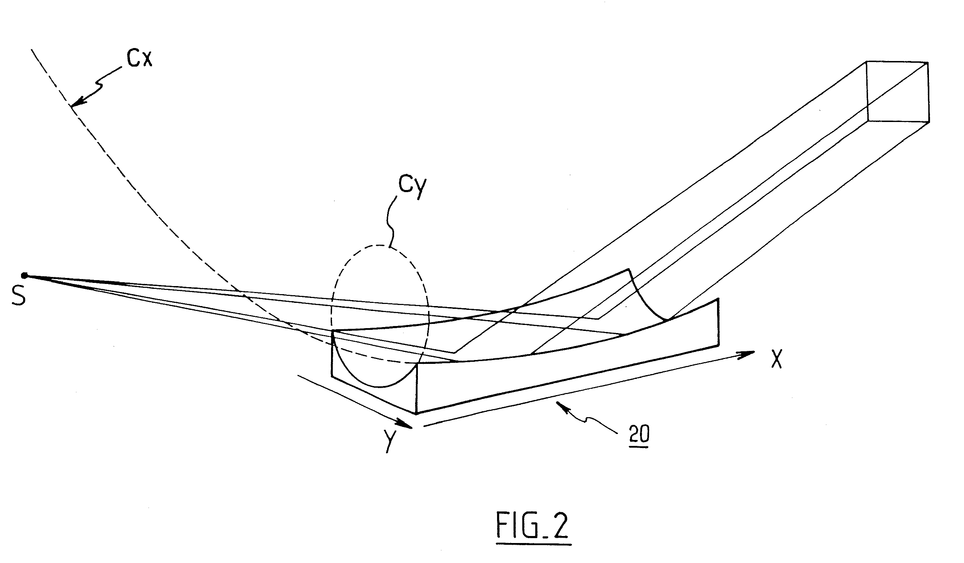

Un exemple d'une telle configuration connue est représenté sur la figure 2a.

Cette figure montre une source S de rayons X dont le flux de rayons X est dirigé vers un monochromateur M.

Un échantillon E1 est porté par un porte-échantillon E2.

L'échantillon E1 comporte en surface un film mince E10 que l'on désire caractériser par réflectométrie.

Les rayons issus de la réflexion sur le monochromateur sont dirigés vers l'échantillon. Et après leur réflexion sur l'échantillon, c'est un détecteur D de rayons X qui recueillera les rayons réfléchis et permettra leur analyse.

La flèche F illustre les déplacements commandés du porte-échantillon et de son échantillon.

Dans cette configuration connue, les mesures R(θ) nécessitent donc de commander des déplacements d'éléments mécaniques du dispositif.

Ceci se répercute naturellement sur la durée des opérations de mesure, car de tels déplacements qui nécessitent une grande précision sont consommateurs de temps.

Selon une deuxième variante de ce premier type de méthode, il est également connu de procéder à des mesures R(θ) en gardant l'échantillon fixe, mais en commandant alors le déplacement de la source de rayons X et du détecteur qui reçoit les rayons après leur réflexion sur l'échantillon, les mouvements de la source et du détecteur étant commandés pour être symétriques par rapport à l'échantillon.

On comprend que dans ce cas encore, les déplacements réalisés contribuent sensiblement à la durée d'acquisition des mesures.

Et ces techniques connues de réalisation de mesures R(θ) sont ainsi associées à des temps de réalisation relativement longs, ce qui constitue une limitation (par exemple pour des applications telles que l'analyse de films minces pour l'industrie de la microélectronique).

Selon un deuxième type de méthode de réflectométrie RX connu, la dispersion des incidences des rayons du faisceau arrivant sur l'échantillon est obtenue par l'intermédiaire d'un ensemble optique apte à produire un effet monodimensionnel ou un effet bidimensionnel.

Ce deuxième type de méthode est connu sous le nom de méthode de réflectométrie RX dispersive en angle.

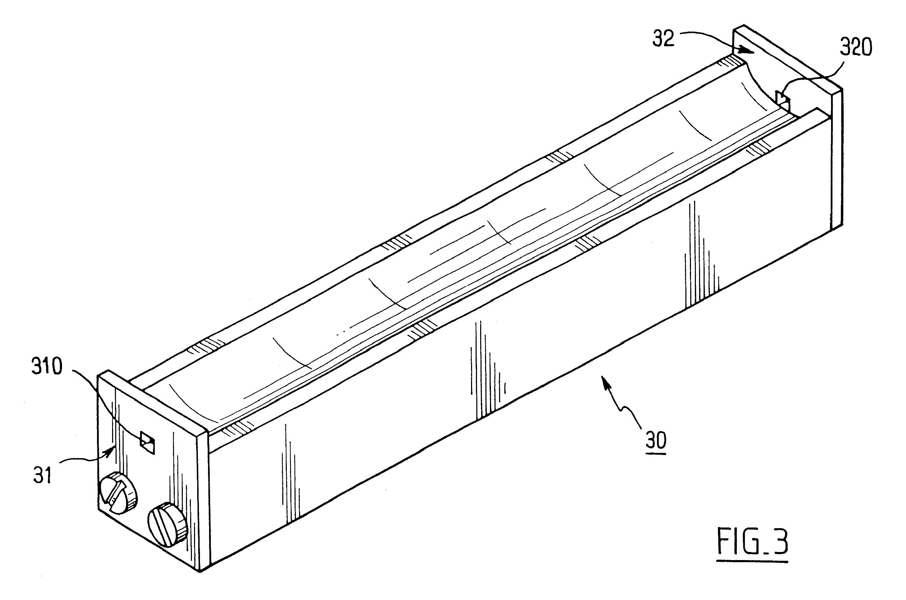

Le principe de cette méthode est illustré sur la figure 3a où une vue en une dimension d'un dispositif 40 permettant d'effectuer des mesures de réflectométrie RX dispersive en angle est présentée.

Ce dispositif 40 comprend :
- Des moyens 41 de génération et de conditionnement de rayons X. Ces moyens comprennent une source de rayons X et un ensemble optique de conditionnement du faisceau de rayons X issus de ladite source, l'ensemble optique permettant de conditionner de manière désirée un faisceau de rayons X que l'on désire diriger sur un échantillon 42,
- Et un détecteur de rayons X 43.

Le conditionnement assuré par l'ensemble optique des moyens 41 correspond à une dispersion contrôlée des incidences du faisceau de rayons X dirigé vers l'échantillon.

On cherche ainsi à ce que les rayons X arrivent sur l'échantillon avec une dispersion angulaire de quelques degrés.

Selon une application privilégiée de l'invention, on cherche à obtenir une dispersion angulaire de l'ordre de 2° ou plus.

Le faisceau réfléchi au niveau de l'échantillon est ensuite collecté par l'intermédiaire du détecteur 43.

On précise que le conditionnement optique réalisé par l'ensemble optique des moyens 41 peut correspondre à un effet monodimensionnel (par exemple focalisation selon une seule dimension), ou un effet optique bidimensionnel.

En général le détecteur 43 est de type PSD ("Position Sensitive Detector") et comprend un capteur 430 de type CCD ou photodiode avec un grand nombre de pixels.

Dans le cas de l'invention et des optiques bidimensionnelles en général, le détecteur 43 pourra être de type détecteur bidimensionnel.

Un détecteur bidimensionnel permet d'identifier et de grouper des pixels correspondants à des valeurs d'angles d'incidence identiques.

Et ce type de détecteur est d'un intérêt particulier car des pixels placés à des positions horizontales différentes (la direction horizontale étant ici définie comme la direction perpendiculaire au plan de la feuille de la figure 3a) peuvent correspondre à des angles d'incidence identiques.

En effet une certaine divergence suivant cette deuxième dimension (perpendiculaire au plan de la feuille) entraîne une faible variation de l'angle d'incidence des rayons-X sur l'échantillon.

Des divergences de l'ordre de 1° pourront ainsi être tolérées suivant cette deuxième dimension dans le cas du domaine d'application de l'invention.

Ce type de détecteur bidimensionnel permet donc de mettre à profit des optiques bidimensionnelles et notamment des optiques permettant de collecter un flux important suivant les deux dimensions, ce qui est le cas de l'ensemble optique considéré dans l'invention.

Pour réaliser un conditionnement bidimensionnel du faisceau pour des mesures de réflectométrie RX dispersive en angle, il est connu selon une première variante d'exploiter la diffraction du faisceau issu d'une source de rayons X à partir d'un ensemble optique dont la surface est un cristal courbé en deux dimensions.

De tels cristaux permettent de conditionner un faisceau initial suivant un phénomène de diffraction RX qui s'effectue selon la loi de Bragg.

On rappelle que la condition de Bragg pour un cristal est de la forme nλ=2dsinθ_{B}, où n est l'ordre de réflexion, λ la longueur d'onde de la radiation incidente pour laquelle la diffraction se produit, d la période d'espacement entre les plans atomiques du cristal impliqués dans la diffraction et θ_{B} l'angle d'incidence sur ces mêmes plans atomiques qui est nécessaire pour que le phénomène de diffraction se produise.

Si on considère un faisceau incident de rayons X, les rayons de longueurs d'onde λ, qui frappent le cristal avec un angle d'incidence θ_{B} bien précis par rapport à une certaine famille de plans atomiques du cristal seront diffractés sur ces mêmes plans atomiques si la condition de Bragg indiquée ci-dessus est vérifiée.

Les cristaux courbés en deux dimensions permettent ainsi de produire un effet bidimensionnel sur le faisceau initial, en vue de réaliser le conditionnement désiré.

Ce conditionnement peut ainsi correspondre à une focalisation suivant deux directions différentes.

Une particularité des cristaux par rapport au revêtement multicouches est qu'il est difficile d'appliquer sur de tels cristaux un gradient en vue d'augmenter la surface utile du cristal.

On pourra se référer à cet égard au document "Approaching real X-ray optics", Hildebrandt et al., Rigaku Journal, Vol. 17 N°1/2000, (notamment pages 18 à 20).

Il résulte de ce qui précède qu'un cristal est limité en ce qui concerne le flux de rayons-X diffractés, suivant la direction de l'ensemble optique formé par le cristal pour laquelle les angles d'incidences des rayons incidents sur le cristal varient de manière importante (la surface de collection est limitée dû à l'absence de gradients).

Cette direction correspond à la direction méridionale de l'ensemble optique formé par le cristal.

Selon une deuxième variante de la méthode de réflectométrie RX dispersive en angle qui consiste à réaliser un conditionnement d'un faisceau par un ensemble optique produisant un effet bidimensionnel, il est également connu de mettre en oeuvre la réflexion d'un faisceau initial issu d'une source de rayons X sur un ensemble optique du type dispositif Kirkpatrick-Baez "en regard", tel que divulgué par le document US 6 041 099.

Chacun des deux miroirs du dispositif KB comporte de préférence un revêtement multicouche à gradient latéral, qui permet de réfléchir le faisceau initial X1 selon la loi de Bragg.

Nous reviendrons sur la définition du multicouche à gradient latéral.

Ces ensembles optiques du type KB en regard permettent donc de conditionner un faisceau initial.

Mais comme on le verra plus en détail dans la suite de ce texte, de tels ensembles optiques peuvent être associés à un encombrement relativement important.

Ceci constitue naturellement une limitation de ces dispositifs connus.

Il apparaît ainsi que les solutions connues pour réaliser des mesures R(θ) pour des applications de réflectométrie RX dispersive en angle comportent toutes des limitations.

Cela est notamment le cas lorsque la dispersion désirée en angles d'incidence sur l'échantillon est supérieure à 2° pour des distances de focalisation supérieures à 150 mm, et que le flux collecté doit être important (dispersion angulaire de l'ordre de 1° suivant la direction transversale à la direction générale de propagation des rayons).

Un autre but de l'invention est de permettre de s'affranchir de ces limitations.

Afin d'atteindre les buts mentionnés ci-dessus, l'invention propose selon un premier aspect un ensemble optique réflectif multicouche à gradient latéral tel que mentionné dans les revendications 1 à 24.

On propose en effet un ensemble optique réflectif multicouche à gradient latéral dont la surface réfléchissante est destinée à réfléchir des rayons X incidents sous faible angle d'incidence en produisant un effet optique bidimensionnel, caractérisé par le fait que ladite surface réfléchissante est constituée d'une surface unique, ladite surface réfléchissante étant conformée selon deux courbures correspondant à deux directions différentes.

Des aspects préférés, mais non limitatifs d'un tel ensemble optique sont le suivants :
■ le gradient latéral s'étend selon la direction méridionale des rayons X incidents ;
■ la surface réfléchissante est régulière ;
■ l'effet optique bidimensionnel est obtenu par une réflexion unique des rayons incidents sur l'ensemble optique ;
■ lesdites directions différentes correspondent respectivement à la direction sagittale et à la direction méridionale des rayons X incidents ;
■ le multicouche est un multicouche à gradient en profondeur ;
■ ladite surface réfléchissante est adaptée pour réfléchir des rayons des raies Cu-K α ;
■ une première desdites deux courbures définit un cercle ;
■ une première desdites deux courbures définit une courbe différente d'un cercle, telle qu'une ellipse ou une parabole ;
■ une première desdites deux courbures définit une courbe ouverte ou fermée différente d'un cercle, d'une ellipse ou d'une parabole ;
■ la seconde desdites deux courbures définit un cercle ;
■ la seconde desdites deux courbures définit une courbe différente d'un cercle, telle qu'une ellipse ou une parabole ;
■ la seconde desdites deux courbures définit une courbe ouverte ou fermée différente d'un cercle, d'une ellipse ou d'une parabole ;
■ la surface réfléchissante a une géométrie de forme sensiblement toroïdale ;
■ la surface réfléchissante a une géométrie de forme sensiblement paraboloïdale ;
■ la surface réfléchissante a une géométrie de forme sensiblement ellipsoïdale ;
■ la surface réfléchissante a une géométrie de forme sensiblement circulaire selon une première direction, et elliptique ou parabolique selon une deuxième direction ;
■ la surface réfléchissante a un rayon de courbure sagittale inférieur à 20 mm ;
■ une fenêtre opaque aux rayons X et comportant une ouverture est associée en entrée et/ou en sortie d'ensemble optique, pour contrôler le flux d'entrée et/ou de sortie de l'ensemble optique, les fenêtres pouvant être amovibles :
   ■ l'ensemble optique comporte une ouverture en entrée et la taille et la forme de ladite ouverture en entrée peuvent être ajustées pour contrôler le flux incident :
   ■ l'ensemble optique comporte une ouverture en sortie et la taille et la forme de ladite ouverture en sortie peuvent être ajustées pour contrôler le rayonnement réfléchi ;
   ■ les ouvertures des fenêtres sont dimensionnées pour réaliser un compromis flux/divergence du rayonnement.

Selon un deuxième aspect, l'invention propose également un procédé de fabrication d'un ensemble optique selon un des aspects mentionnés ci-dessus, et étant caractérisé en ce qu'il comprend le revêtement d'un substrat présentant déjà une courbure, et la courbure de ce substrat selon une deuxième direction différente.

Des aspects préférés, mais non limitatifs de ce procédé de fabrication sont les suivants :
■ la direction selon laquelle le substrat présente déjà une courbure correspond à la direction sagittale de l'ensemble optique ;
■ courbure du substrat qui correspond à la direction sagittale de l'ensemble optique définit un rayon de courbure inférieur à 20 mm ;
■ la direction selon laquelle on courbe le substrat correspond à la direction méridionale de l'ensemble optique ;
■ ledit substrat présente une rugosité inférieure à 10 angströms rms ;
■ on constitue le substrat lui-même, en partant d'un élément en forme de tube, de cône, ou de pseudo-cône présentant déjà une courbure selon une direction perpendiculaire à l'axe du tube, du cône ou du pseudo-cône ;
■ l'élément est un tube de verre à section transversale circulaire ;
■ le verre est de type Duran (marque déposée) ;
■ la constitution du substrat comprend le découpage du tube selon la direction longitudinale du tube, de manière à obtenir un substrat en forme de cylindre ouvert ;
■ le découpage selon la direction longitudinale du tube est suivi d'un découpage pour dimensionner l'ensemble optique en longueur ;
■ on effectue le revêtement pour constituer un multicouche avant de courber le substrat ;
■ on courbe le substrat pour le conformer à la géométrie désirée avant de le revêtir pour constituer un multicouche ;
■ on couple l'ensemble optique à un filtre, pour assurer l'atténuation des bandes spectrales non désirées tout en garantissant une transmission suffisante d'une bande de longueur d'onde prédéterminée pour laquelle on désire réfléchir les rayons X incidents ;
■ le filtre est un filtre de Nickel de 10 µm ;
■ le filtre est réalisé par une des techniques suivantes :
   o réalisation de deux filtres dont les épaisseurs ajoutées correspondent à l'épaisseur de filtre souhaitée, positionnés respectivement sur les fenêtres d'entrée et de sortie du rayonnement d'un boîtier de protection contenant l'ensemble optique,
   o dépôt d'une couche de matériau de filtrage sur le revêtement multicouche, avec une épaisseur de dépôt approximativement donnée par la relation suivante : d = (e sin θ) / 2 (où e est l'épaisseur "optique" de filtre nécessaire et θ l'angle d'incidence sur l'optique).

Et selon un troisième aspect, l'invention propose un dispositif de génération et de conditionnement de rayons-X pour des applications de réflectométrie RX dispersive en angle comprenant un ensemble optique selon l'un des aspects mentionnés ci-dessus, couplé à une source rayons-X de telle sorte que les rayons-X émis par la source sont conditionnés en deux dimensions afin d'adapter le faisceau émis par la source à destination d'un échantillon, les rayons-X ayant des angles d'incidences différents sur l'échantillon considéré.

Des aspects préférés, mais non limitatifs d'un tel dispositif sont les suivants :
■ la dispersion d'angle d'incidences sur l'échantillon correspond sensiblement à la dispersion angulaire suivant la dimension sagittale du faisceau réfléchi par l'ensemble optique ;
■ l'optique est orientée vis à vis de l'échantillon de telle manière que la normale au centre de l'ensemble optique soit sensiblement parallèle à la surface de l'échantillon ;
■ l'angle de capture au niveau de l'échantillon est supérieur à 2° suivant une première dimension correspondant à la dimension sagittale de l'ensemble optique et de l'ordre de 1° suivant une deuxième dimension correspondant à la dimension méridionale de l'ensemble optique, l'ensemble optique étant positionné de telle manière que la dispersion en angles d'incidence des rayons-X sur l'échantillon est supérieure à 2°, l'échantillon étant placé à une distance supérieure à 15 cm par rapport à l'ensemble optique.

D'autres aspects, buts et avantages de l'invention apparaîtront mieux à la lecture de la description suivante de formes préférées de réalisation de l'invention, faite en référence aux dessins annexés sur lesquels, outre les figures 1a, 2a et 3a qui ont déjà été commentées ci-dessus :
- La figure 1 est une représentation schématique d'une première forme de réalisation d'un ensemble optique selon l'invention, permettant d'effectuer une focalisation bidimensionnelle d'un faisceau incident de rayons X,
- La figure 2 est une vue analogue montrant une deuxième forme de réalisation d'un ensemble optique selon l'invention, permettant d'effectuer une collimation d'un faisceau incident de rayons X,
- La figure 3 est une vue analogue montrant une troisième forme de réalisation d'un ensemble optique selon l'invention, dans laquelle on recherche une faible divergence du flux réfléchi,
- La figure 4 est une représentation schématique d'un dispositif de réflectométrie RX dispersive en angle selon l'invention (le détecteur de rayons X n'étant pas représenté sur cette figure pour des raisons de clarté),
- Les figures 5a et 6a mettent en évidence de manière schématique les contraintes d'allongement, liées à es ensembles optiques KB de type connu, qui sont nécessaires pour augmenter la dispersion angulaire du faisceau réfléchi suivant les directions transversales à la direction de propagation du faisceau.

On précise en préambule à cette description que les figures sont destinées à illustrer le principe de l'invention, et ne représentent pas nécessairement les dimensions et échelles de manière réalistes.

Ceci est vrai en particulier pour les angles d'incidence (voire de réflexion) des rayons X.

Ces rayons X arrivent en réalité sur les surfaces réfléchissantes selon l'invention avec une incidence inférieure à 10°.

On définit également les directions méridionales et sagittales par rapport à la direction générale de propagation du faisceau de rayons X :
- La direction méridionale correspond à la direction moyenne de propagation de ce faisceau (et plus précisément à la direction moyenne entre les directions moyennes de propagation du faisceau avant et après sa réflexion sur les ensembles optiques dont il va être question),
- La direction sagittale correspond à une direction transversale horizontale de cette direction méridionale (la verticale étant ici définie par la normale moyenne à la partie de la surface réfléchissante des ensembles optiques qui vont être décrits et qui est effectivement utilisée pour réfléchir le faisceau de rayons X incident).

### Description de l'ensemble optique considéré dans l'invention

En référence maintenant à la figure 1, on a représenté un ensemble optique 10 destiné à réfléchir des rayons X incidents issus d'une source S de rayons X.

La source S peut être en particulier du type tube à rayons X, anode tournante, ou encore source de rayons X à microfoyer.

L'ensemble optique 10 comprend une structure multicouche formée sur un substrat (par exemple en verre), qui définit une surface réfléchissante pour les rayons X incidents.

La surface réfléchissante de cet ensemble optique a une géométrie particulière.

Plus précisément, cette surface réfléchissante est conformée selon deux courbures correspondant à deux directions différentes.

Et cette surface réfléchissante présente ainsi des différences importantes par rapport à des surfaces réfléchissantes du type de celles mises en oeuvre dans des ensembles optiques tels que ceux enseignés par le document US 6 041 099 :
- La surface réfléchissante est une surface réfléchissante unique, au contraire de ce qui est le cas pour des ensembles optiques dans lesquels on a assemblé deux miroirs élémentaires différents,
- Cette surface réfléchissante est régulière (ce terme signifiant dans le présent texte que la surface réfléchissante ne présente pas de discontinuité de deuxième ordre (points anguleux ou arêtes - saillantes ou creuses - etc..),
- Par ailleurs, une différence qui est également importante est que dans le cas de l'invention, les rayons incidents ne subissent qu'une réflexion unique pour produire l'effet optique bidimensionnel désiré, alors que deux réflexions sont nécessaires dans le cas de l'ensemble optique du document US 6 041 099.

Plus précisément encore, la surface réfléchissante de l'ensemble optique selon l'invention présente une courbure Rx dans la direction X méridionale, et une courbure Ry dans la direction Y sagittale.

La figure 1 permet de visualiser ces rayons de courbure, deux courbes Cx et Cy ayant été représentées pour montrer l'allure des courbes définies par les rayons de courbure respectifs Rx et Ry.

Chacun des deux rayons de courbure peut être constant, ou varier le long de sa courbe associée.

Chacune des courbes Cx, Cy peut ainsi être un cercle, mais également une ellipse, une parabole, ou une autre courbe (ouverte ou fermée).

En tout état de cause, la surface réfléchissante de l'ensemble optique 10 n'a pas une forme simple sphérique (c'est à dire que les rayons Rx et Ry ne sont pas à la fois égaux et constants).

Chacune des courbes Cx, Cy est ainsi associée à une direction différente de l'espace (deux directions perpendiculaires sur l'exemple commenté ici).

Et chacune de ces courbes produit sur les rayons X qui viennent être réfléchis sur la surface réfléchissante un effet optique monodimensionnel :
- La courbe Cx produit un effet optique monodimensionnel selon la direction X,
- La courbe Cy produit un effet optique monodimensionnel selon la direction Y.

Et chacun de ces effets dimensionnels dépend de la courbure associée à la courbe, et de sa loi d'évolution le long de cette courbe.

On pourra ainsi paramétrer les courbes Cx et Cy pour obtenir sélectivement des effets monodimensionnels associés tels qu'une focalisation ou une collimation monodimensionnelle.

La figure 1 représente le cas dans lequel chaque courbe Cx, Cy produit une focalisation monodimensionnelle.

A ces fins, Rx et Ry sont différents, mais chacun est constant (les courbes Cx et Cy sont des cercles).

Dans ce premier mode de réalisation préféré, la surface réfléchissante de l'ensemble optique a ainsi une géométrie toroïdale.

Il en résulte une focalisation bidimensionnelle, qui concentre les rayons divergents issus de la source S vers un point image unique I.

Et le rayon de courbure Ry (rayon de courbure sagitalle) peut avoir (dans ce mode de réalisation comme dans les autres) une valeur inférieure à 20 mm nécessaire pour des focalisations sur de courtes distances, inférieures à 90 cm (distance source-point de focalisation) selon une application privilégiée de l'invention. On reviendra sur cet aspect.

On remarquera que l'ensemble optique selon l'invention permet de s'affranchir des inconvénients mentionnés en introduction de ce texte à propos des miroirs de type « Montel » à revêtement multicouches.

En particulier, comme cela a déjà été mentionné ci-dessus, cet ensemble optique est monopièce (ne nécessitant pas d'assemblage délicat).

Et les rayons X incidents ne subissent qu'une réflexion unique sur sa surface réfléchissante.

En outre, la surface réfléchissante est unique et régulière.

On a dit que la surface réfléchissante de l'ensemble optique 10 était définie par un multicouche.

Ce multicouche (comme tous les multicouches dont il sera question dans ce texte) comporte au minimum un « gradient latéral ».

Cette caractéristique permet de réfléchir efficacement des rayons X présentant des incidences locales différentes par rapport à la surface réfléchissante.

On comprend en effet que les différents endroits de la surface réfléchissante ne reçoivent pas les rayons X incidents avec la même incidence locale (du fait de la divergence du faisceau incident, et de la géométrie de cette surface réfléchissante).

Par multicouche à gradient latéral, on entend ici un multicouche dont la structure de couche est adaptée pour que la condition de Bragg soit respectée en tout point de la surface utile du miroir.

On rappelle que la condition de Bragg est de la forme nλ = 2d*sinθ, avec :
n : ordre de la réflexion,
λ :longueur d'onde de la radiation incidente,
d : période du multicouche,
θ : angle d'incidence sur la surface du multicouche.

Ainsi, pour un rayonnement de rayons X incidents selon une bande étroite de longueur d'onde contenant par exemple les raies Kα du cuivre (raies Cu-Kα de longueurs d'onde voisines de 0.154 nm), le miroir multicouche à gradient latéral permet de maintenir les conditions de Bragg sur l'ensemble de la surface utile du miroir.

Ceci conduit à la réflexion de la bande de longueur d'onde prédéterminée (dans l'exemple ci-dessus contenant les raies Cuivre Kα), par différentes régions du miroir sur lesquelles les rayons incidents présentent des angles d'incidence locaux variables.

On peut ainsi augmenter la surface du miroir qui est effectivement utilisée.

Le gradient est obtenu en faisant varier la période du multicouche localement, de manière adaptée.

Ce type de structure multicouche à gradient latéral permet ainsi d'augmenter l'angle solide de collection de l'ensemble optique, ce qui conduit à un flux réfléchi plus élevé par rapport à des miroirs monocouches fonctionnant en réflexion totale, pour une géométrie d'optique identique.

La présence d'un gradient latéral permet également de s'affranchir des limites de certaines configurations connues, telles que les configurations utilisant le cercle de Rowland pour lesquels la distance entre la source et l'optique et la distance entre l'optique et l'échantillon sont identiques, et les variations d'angles d'incidence sur les optiques peuvent être faibles pour des optiques de petites tailles.

En effet, les configurations utilisant le cercle de Rowland permettent d'utiliser des optiques sans gradient mais présentent la limitation de ne pouvoir effectuer d'agrandissement ou de réduction de la tache image par rapport à la source (une réduction de la tache image par rapport à la source est envisageable par l'utilisation de fentes, mais ce moyen s'avère peu précis et limite le flux collecté).

On trouvera une illustration de ce type de configuration connue dans le document « A point-focusing small-angle x-ray scattering camera using a doubly curved monochromator of a W/Si multilayer » de Sasanuma et al. (Review of Scientific Instruments, American Insitute of Physics, New York vol. 67 N°3, 1 mars 1996 (pages 688-692).

On précise que le multicouche des différents modes de réalisation de l'invention peut également présenter un gradient en profondeur.

Un tel gradient en profondeur permet de remplir les conditions de Bragg pour des angles d'incidences fixes et des longueurs d'ondes variables, ou vice-versa.

Il est ainsi possible par exemple d'augmenter la bande passante en longueur d'onde du multicouche de l'ensemble optique, et de focaliser ou collimater des rayons X de longueurs d'ondes différentes, au niveau d'un même plan image donné (cas d'une géométrie fixe - c'est à dire d'une configuration dans laquelle les positions relatives de la source de rayons incidents, de l'ensemble optique et du plan image sont fixes).

On peut de la sorte utiliser des sources de rayons X de longueurs d'ondes différentes pour réfléchir les rayons X issus des différentes sources avec le même ensemble optique, sans que cela nécessite un nouveau positionnement de la source par rapport et/ou du ou des plan(s) image par rapport à l'ensemble optique.

On utilise dans ce cas la tolérance en longueur d'onde de l'ensemble optique (tolérance en Δλ).

De la même façon, il est également possible de traduire cette tolérance en Δλ en une tolérance en Δθ.

Une tolérance sur la longueur d'onde correspondant en effet - dans le cadre de la condition de Bragg - à une tolérance sur l'angle d'incidence, il est possible à longueur d'onde constante du faisceau incident de collecter et de réfléchir un flux lumineux incident dont les rayons de même longueur d'onde ont des incidences locales différentes.

On peut en particulier de la sorte utiliser des sources de rayons X de plus grande dimension (augmentation de l'acceptance angulaire).

En référence maintenant à la figure 2, on a représenté un autre mode de réalisation préféré de l'invention, illustré par un ensemble optique 20.

La surface réfléchissante du multicouche de cet ensemble optique est conformée dans les directions respectives X et Y selon deux courbes Cx et Cy respectivement parabolique et circulaire, chacune de ces courbes produisant une collimation selon sa direction X ou Y associée.

On génère ainsi à partir du faisceau incident divergent une collimation parallèle selon toutes les directions de l'espace.

Et il est ainsi possible de réaliser selon l'invention des ensembles optiques composés d'un miroir multicouche (à gradient latéral, et éventuellement en outre à gradient en profondeur), dont la surface réfléchissante peut avoir une parmi différentes formes complexes asphériques quelconques.

Il est ainsi possible en particulier de donner à cette surface réfléchissante une des géométries suivantes :
- géométrie de forme sensiblement toroïdale,
- géométrie de forme sensiblement paraboloïdale,
- géométrie de forme sensiblement ellipsoïdale,
- géométrie de forme sensiblement circulaire selon une première direction (en particulier la direction sagittale), et elliptique ou parabolique selon une deuxième direction (en particulier la direction méridionale).

Le gradient latéral pourra en particulier s'étendre selon la direction méridionale des rayons X incidents.

Et la période du multicouche pourra être adaptée pour réfléchir en particulier des rayons des raies Cu- Kα.

En référence maintenant à la figure 3, on a représenté un ensemble optique 30 selon l'invention, muni de deux parois d'extrémité 31 et 32, positionnées respectivement à la section d'entrée et à la section de sortie du rayonnement devant être réfléchi par cet ensemble optique.

Chaque paroi 31, 32 présente une ouverture (respectivement 310, 320) laissant passer le rayonnement X, les parois étant par ailleurs opaques aux rayons X.

Les parois pourront être par exemple en plomb.

Et il est possible d'ajuster la forme et la taille de chaque ouverture (indépendamment de l'autre ouverture), pour contrôler le flux incident (par l'ouverture située à la section d'entrée), et le rayonnement réfléchi (par l'ouverture située à la section de sortie).

On peut ainsi dimensionner les ouvertures, pour rechercher un compromis entre l'intensité du flux (d'entrée ou de sortie), et sa divergence.

On précise que les parois 31 et 32 peuvent être conçues pour être amovibles, par exemple en étant vissées sur les bords transverses horizontaux de l'ensemble optique comme cela est représenté sur la figure 3.

De la sorte, on peut adapter de manière souple des ensembles optiques pour rechercher si besoin un compromis flux/divergence souhaité.

Il est également possible de ne prévoir qu'une paroi d'entrée, ou une paroi de sortie.

Et chaque paroi associée à son ouverture constitue ainsi une « fenêtre » laissant passer les rayons X.

### Description d'un procédé de fabrication privilégié

On va maintenant décrire un procédé préféré permettant d'obtenir un ensemble optique du type décrit ci-dessus, en obtenant les avantages suivants :
- garantir un très bon état de surface du substrat utilisé pour réaliser le revêtement multicouche (les spécifications de rugosité de surface pour des substrats de miroirs multicouches à rayons X correspondent usuellement à des rugosités ne devant pas dépasser une valeur maximale de l'ordre de 10 angströms rms (root mean square)), et
- tout en permettant également de constituer des surfaces selon un rayon de courbure sagitalle Ry extrêmement réduit, d'une valeur par exemple inférieure à 20 mm (permettant par exemple de focaliser selon une distance source-point de focalisation inférieure à 90 cm).

En effet, il serait difficile d'obtenir une surface de substrat pour le dépôt du multicouche présentant de telles valeurs de rayons de courbure et d'état de surface :
- en mettant en oeuvre le polissage d'un substrat qui présente déjà une courbure sagittale aussi faible : dans ce cas le polissage du substrat préformé s'avèrerait délicat,
- ou bien en courbant selon le rayon de courbure sagittale Ry un substrat plan déjà poli - dans ce cas il serait difficile d'obtenir les faibles rayons de courbure désirés (alors que de tels rayons de courbure permettent de produire les effets optiques désirés sur de courtes distances, et de réduire ainsi l'encombrement de l'ensemble optique).

Dans le cas du procédé de fabrication selon l'invention, l'état de surface demandé est obtenu sans traitement particulier, en utilisant pour former l'ensemble optique un substrat qui présente déjà une courbure selon une direction de courbure.

Et la direction selon laquelle le substrat présente déjà une courbure correspond de préférence à la direction sagittale de l'ensemble optique, une fois celui-ci fabriqué et placé par rapport à la source de rayons X (cette direction étant comme on l'a dit définie par rapport au rayonnement incident, mais pouvant aussi être définie par rapport à l'ensemble optique lui-même dans la mesure où l'ensemble optique est destiné à être orienté d'une manière spécifique par rapport au rayonnement incident).

Un tel substrat présente une face qui correspond à la face de l'ensemble optique qui portera la surface réfléchissante. On appellera cette face du substrat « face optique ».

Ainsi, de manière générale on utilise selon l'invention un substrat présentant déjà une courbure (selon une direction que l'on fera correspondre de préférence à la direction sagittale de l'ensemble optique), et on courbe ce substrat selon une deuxième direction différente (correspondant de préférence à la direction méridionale de l'ensemble optique).

On effectue également un revêtement de la face optique du substrat par un multicouche. Ce revêtement peut être réalisé avant la courbure du substrat, ou après.

Dans tous les cas, on obtient de la sorte un ensemble optique.

En choisissant un substrat présentant la courbure désirée (en forme et en valeur(s) de rayon(s) de courbure), et en le courbant de manière désirée, on peut obtenir un ensemble optique ayant la géométrie désirée.

Il est également possible de constituer le substrat lui-même, en particulier en partant d'un élément (en particulier en verre) tel qu'un tube, un cône, ou même un pseudo-cône (qui est ici défini comme une surface de révolution générée par la révolution selon une courbe telle qu'une ellipse d'une droite génératrice oblique par rapport à son axe de révolution et coupant celui-ci dans l'espace).

Dans le cas d'un élément en tube, le tube peut avoir une section transversale circulaire, mais également elliptique, ou correspondre à toute courbe fermée.

Et un tel élément peut aussi être un cylindre ouvert dont la directrice est une courbe ouverte telle qu'une portion de parabole.

Dans tous les cas, l'élément de départ présente une courbure selon une direction qui correspond de préférence à la direction sagittale de l'ensemble optique que l'on souhaite fabriquer.

Et cette direction est perpendiculaire à l'axe du tube, du cône ou du pseudo-cône.

Dans un mode de réalisation préféré, un tel substrat peut en particulier être obtenu à partir d'un tube de verre dont la section transversale est circulaire.

Dans ce mode de réalisation préféré, le substrat à partir duquel on va fabriquer l'ensemble optique et qui présente une courbure selon une direction peut être en particulier obtenu en :
- découpant un tube de verre présentant le rayon de courbure sagittale désiré, tel qu'un tube de verre de type Duran (marque déposée) fabriqué par la société SCHOTT, puis
- en revêtant le tube ainsi découpé par des dépôts de matière successifs pour constituer dessus le multicouche.

Un tel substrat sera ensuite courbé selon une direction (de préférence méridionale), avec la courbure désirée, pour obtenir l'ensemble optique.

Et on précise qu'il est possible - dans ce mode de réalisation comme dans les autres - de procéder d'abord à la courbure de l'élément (ici le tube découpé), et au revêtement ensuite.

On précise que dans tous les modes de mise en oeuvre du procédé selon l'invention, le multicouche ainsi constitué est un multicouche à gradient latéral (et possiblement également à gradient en profondeur).

Le découpage du tube de verre est réalisé selon la direction longitudinale du tube en effectuant une section selon une direction parallèle à l'axe de symétrie du tube (et pouvant même comprendre cet axe pour constituer un demi-tube), de manière à obtenir un substrat en forme de cylindre ouvert.

La directrice de ce cylindre ouvert a donc dans ce mode de réalisation préféré la forme d'une partie de cercle - par exemple un demi-cercle.

Ce découpage longitudinal est suivi d'un autre découpage pour dimensionner l'optique en longueur.

A l'issue de ces opérations de découpage, on a donc constitué un substrat pour la fabrication d'un ensemble optique selon l'invention.

Après avoir revêtu le substrat avec le multicouche, on courbe le substrat revêtu selon la deuxième direction souhaitée, qui correspond à la direction méridionale, pour conformer la surface du multicouche selon la géométrie désirée.

Ainsi, dans ce mode préféré de réalisation du procédé de fabrication de l'ensemble optique selon l'invention, on peut constituer un substrat cylindrique dont la directrice a sensiblement la forme d'une partie de cercle, puis on effectue le revêtement d'un tel substrat, et la courbure de ce substrat selon une direction non comprise dans le plan de la directrice du cylindre dudit substrat (en particulier selon la direction de la génératrice du cylindre).

Le Demandeur a observé qu'il était ainsi beaucoup plus facile de fabriquer des ensembles optiques selon l'invention, que par une des techniques mentionnées plus haut (revêtement d'un substrat déjà complètement conformé à la géométrie souhaitée, ou courbure selon deux directions d'un multicouche plan).

Et il est ainsi possible d'obtenir des substrats, utilisés par la suite pour le revêtement multicouche, présentant un très bon état de surface (rugosité n'excédant pas 10 angströms rms), et de faibles rayons de courbure sagitalle (inférieurs à 20 mm).

On peut ainsi obtenir les effets optiques sur des distances courtes.

Dans le cas de deux focalisations monodimensionnelles, on rappelle ainsi que les caractéristiques de focalisation tangentielle (méridionale) et sagittale sont données par les formules suivantes, pour un miroir toroïdal :
- focalisation tangentielle : 1/p + 1/q = 2 / (Rx sinθ), avec p : distance source-miroir, q : distance miroir-plan de focalisation, θ: Angle d'incidence,
- focalisation sagittale : 1/p + 1/q = 2 sinθ / Ry (pour une focalisation en deux dimensions les distances p et q sont identiques pour les deux formules).

On précise qu'il est également possible en variante de partir d'une même partie de tube découpée pour former un cylindre dont la directrice est ouverte, et d'inverser l'ordre du revêtement et de la courbure dans la deuxième direction par rapport à ce qui a été décrit ci-dessus.

Dans ce cas, on courbe d'abord le substrat cylindrique, puis on effectue le revêtement pour constituer le multicouche sur la surface ainsi conformée.

Dans tous les cas, le revêtement peut être effectué avec tous types de matériaux permettant de réaliser des multicouches réflectifs pour rayons X.

Et ce revêtement peut mettre en oeuvre tout type de procédé connu à cet effet, par exemple une pulvérisation (possiblement assistée par plasma) ou un autre type de dépôt sous vide.

On précise également que pour des applications nécessitant une importante pureté spectrale, l'ensemble optique destiné à réfléchir les rayons X pourra être couplé à un filtre fabriqué à partir d'une épaisseur et d'un matériau approprié, pour assurer l'atténuation des bandes spectrales non désirées tout en garantissant une transmission suffisante d'une bande de longueur d'onde prédéterminée pour laquelle on désire réfléchir les rayons X incidents.

Ainsi pour des optiques réalisées à partir de revêtements multicouches W/Si pour réfléchir les raies Cuivre Kα, un filtre de Nickel de 10 µm peut être utilisé pour atténuer avec un facteur 8 la raie cuivre Kβ (0,139 nm) en conservant une transmission suffisante pour les raies Kα (supérieure à 60%).

Cette fonction de filtrage s'ajoute à la "monochromatisation naturelle" obtenue à l'aide du multicouche et peut donc permettre pour des applications où la pureté spectrale est une priorité d'augmenter les performances de l'optique multicouche décrite dans l'invention.

Concernant cet aspect, deux modes de réalisation alternatifs du filtre sont à considérer :
- réalisation de deux filtres dont les épaisseurs ajoutées correspondent à l'épaisseur de filtre souhaitée (par exemple deux filtres de même épaisseur égale à la moitié de l'épaisseur totale souhaitée), positionnés respectivement sur les fenêtres d'entrée et de sortie du rayonnement d'un boîtier de protection contenant l'ensemble optique,
- dépôt d'une couche de matériau (utilisée pour le filtrage) sur le revêtement multicouche. La surface de l'optique est alors constituée d'un revêtement multicouche réfléchissant (à gradient latéral) et d'une couche surfacique assurant la fonction de filtre pour augmenter la pureté spectrale du rayonnement réfléchi. L'épaisseur déposée est alors approximativement donnée par la relation suivante : d = (e sin θ) / 2 (où e est l'épaisseur "optique" de filtre nécessaire et θ l'angle d'incidence sur l'optique).

### Description d'un mode d'application particulier

On va maintenant décrire un aspect de l'invention qui concerne plus particulièrement la réflectométrie RX dispersive en angle.

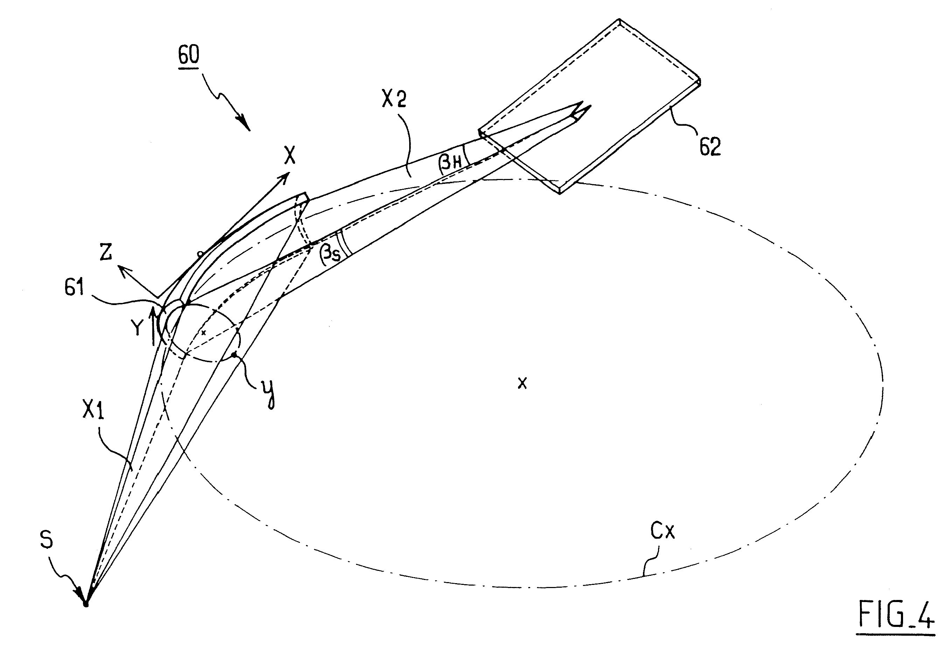

La figure 4 représente un dispositif 60 permettant de réaliser des mesures de type R(θ) pour ce type d'application.

Plus précisément, sur cette figure sont représentées :
- Une source S de rayons X,
- Un ensemble optique 61 de conditionnement du faisceau initial X1 issu de la source S,
- Et un échantillon 62.

Le détecteur de rayons X normalement destiné à détecter les rayons issus de la réflexion sur l'échantillon n'est pas représenté sur cette figure, par souci de clarté.

En référence à la figure 4, on précise que les dispersions angulaires du faisceau X2 réfléchi sur l'ensemble optique 61 ne sont pas représentatives.

En effet sur la figure 4, la dispersion angulaire (β_{M}) suivant la direction méridionale apparaît plus élevée que la dispersion angulaire suivant la direction sagittale (β_{S}). Ceci n'est pas le cas suivant une variante avantageuse de l'invention.

Le dispositif 60 comporte une source S de rayons X, qui émet un faisceau initial X1.

Le faisceau initial X1 issu de la source est dirigé vers l'ensemble optique 61, dont la surface réfléchissante est conformée selon deux courbures correspondant à deux directions différentes.

Cet ensemble optique 61 est ainsi apte à produire sur le faisceau initial X1 un effet optique bidimensionnel, pour générer un faisceau X2 qui présente une dispersion angulaire contrôlée.

Le faisceau X2 est ensuite dirigé vers l'échantillon 62 dont on désire caractériser la réflectivité, par exemple pour des applications telles que mentionnées au début de ce texte à propos des mesures de type R(θ).

Les différents éléments du dispositif 60 sont fixes pour l'ensemble des mesures R(θ) pour une tache d'analyse donnée sur l'échantillon.

Et l'ensemble optique 61 permet de générer un faisceau X2 conditionné de manière désirée selon un effet bidimensionnel (qui est typiquement une focalisation bidimensionnelle).

Plus précisément, l'ensemble optique 61 conditionne le faisceau X2 de telle manière que l'on obtient un angle de convergence élevé au niveau de l'échantillon, et notamment suivant une dimension qui correspond à la dimension sagittale de l'ensemble optique 61 (c'est à dire la direction Y sur la figure 4).

Plus précisément encore, selon une variante avantageuse de l'invention :
- l'angle de capture au niveau de l'échantillon (c'est à dire l'angle de convergence de l'optique) est :
   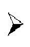 supérieur à 2° suivant une dimension (correspondant à la dimension sagittale de l'optique),
   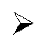 et de l'ordre de 1° suivant une autre dimension (correspondant à la dimension méridionale de l'optique),
- et la dispersion d'angles d'incidence des rayons du faisceau X2 sur l'échantillon est supérieure à 2°, l'échantillon étant placé à des distances supérieures à 15 cm par rapport à l'ensemble optique.

Ceci est obtenu notamment :
- par la géométrie de la surface de l'ensemble optique 61,
- par le positionnement de cet ensemble optique par rapport à l'échantillon 62 : ce positionnement est défini de telle manière que la dispersion d'angles d'incidences des rayons-X arrivant sur l'échantillon soit supérieure à 2°.

Ce dispositif 60 permet d'effectuer des mesures de réflectométrie RX dispersive en angle rapides, car il n'implique pas de déplacement d'élément mécanique.

C'est en effet l'ensemble optique 61 qui assure la dispersion angulaire du faisceau X2 en conditionnant ce faisceau de manière à l'adapter au niveau de l'échantillon pour que les rayons-X arrivant sur cet échantillon aient des angles d'incidence différents au niveau de la tache image considérée (point focal de l'ensemble optique sur l'échantillon).

L'ensemble optique 61 présente donc une surface réfléchissante unique, cette surface étant courbée suivant deux dimensions avec une première courbure suivant la direction sagittale et une deuxième courbure suivant la direction méridionale.

La figure 4 donne une illustration plus détaillée de cet ensemble optique.

Il s'agit dans ce cas d'un ensemble optique permettant d'effectuer une focalisation en 2 dimensions avec une première courbure suivant la direction Y (courbure circulaire CY) et une deuxième courbure suivant la direction X (courbure circulaire CX).

Dans ce cas précis, l'optique a donc une forme toroïdale.

De manière générale, l'ensemble optique 61 pourra avoir une forme toroïdale ou une forme ellipsoïdale dans le cas d'une focalisation bidimensionnelle.

L'ensemble optique 61 pourra également avoir une forme paraboloïdale dans le cas d'une collimation bidimensionnelle.

Selon une autre variante, l'ensemble optique 61 pourra également posséder une courbure circulaire suivant une dimension, à titre d'exemple suivant la direction sagittale, et une courbure parabolique suivant une autre dimension, à titre d'exemple suivant la direction méridionale.

L'ensemble optique 61 possède un revêtement multicouche à gradient latéral (c'est à dire suivant la direction méridionale qui correspond à la direction X sur la figure 4).

Il est à noter que des éléments additionnels peuvent être placés en amont de l'ensemble optique 61 (entre la source S et cet ensemble optique) tels que par exemple des fentes pour régler le faisceau.

L'ensemble optique 61 possède une surface utile de collection importante, ce qui permet d'obtenir un angle de convergence élevé au niveau de l'échantillon notamment suivant la dimension sagittale de l'optique.

A titre d'exemple, la surface utile de collection de l'ensemble optique 61 peut ainsi avoir suivant la direction sagittale une dimension de l'ordre de 1 cm pour des distances de focalisation de l'ordre de 200 mm. La dimension dont on parle ci-dessus correspond à la longueur de la droite obtenue en joignant les deux points extrêmes de la surface utile de collection suivant la direction sagittale.

Ainsi pour un ensemble optique ayant un rayon de courbure de l'ordre de 7 mm (et focalisant le faisceau à partir d'une source placée à 40 cm) la surface utile de collection peut correspondre à une portion suivant la dimension sagittale de l'ordre d'un quart de cercle soit environ 1cm, ce qui correspond à un angle de capture au niveau de l'échantillon de l'ordre de 3°.

Et selon une variante avantageuse de l'invention, l'ensemble optique 61 permet d'obtenir ainsi un angle de capture au niveau de l'échantillon qui est :
- supérieur à 2° suivant une première dimension de l'ensemble optique 41 (correspondant à sa direction sagittale, c'est à dire la direction Y sur la figure 4),
- de l'ordre de 1° suivant une deuxième dimension de l'ensemble optique 61 (correspondant à sa direction méridionale, c'est à dire la direction X sur la figure 4).

Dans une telle configuration, l'échantillon est disposé à des distances de focalisation (distance entre l'ensemble optique 61 et l'échantillon) supérieures à 150 mm.

A titre d'exemple, les distances de focalisation peuvent être de l'ordre de 300 mm à 200mm.

On adaptera ainsi l'orientation de l'ensemble optique 61 par rapport à l'échantillon de manière à ce que la dispersion en angles d'incidence des rayons-X sur l'échantillon soit supérieure à 2°.

On définit l'orientation de l'ensemble optique 61 comme la position angulaire de cet ensemble optique pour une rotation donnée autour de son axe optique (axe parallèle à la direction méridionale).

Un positionnement privilégié des éléments du dispositif consiste à orienter l'ensemble optique de telle manière que la dispersion d'angles d'incidence sur l'échantillon corresponde sensiblement à la dispersion angulaire suivant la dimension sagittale (la direction Y sur la figure 4) du faisceau X2 réfléchi au niveau de l'ensemble optique.

Un positionnement privilégié consiste ainsi à orienter l'ensemble optique de telle manière que la normale moyenne à la surface utile de l'ensemble optique (ou la normale au centre de l'optique) soit sensiblement parallèle à la surface de l'échantillon.

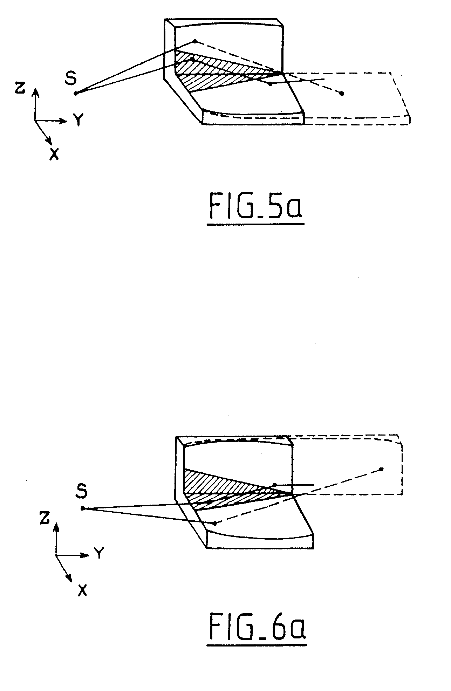

Pour le domaine d'application de l'invention, les incidences moyennes sur l'échantillon sont rasantes et dans le cas d'incidences très rasantes (incidence moyenne de l'ordre de 1°) l'orientation de l'ensemble optique 61 peut être décrite comme étant telle que :
- la normale moyenne de l'ensemble optique est sensiblement parallèle à la surface de l'échantillon 62,
- la direction sagittale de l'ensemble optique 61 est sensiblement perpendiculaire à la surface de l'échantillon 62,
- la direction méridionale de l'ensemble optique 61 est sensiblement parallèle à la surface de l'échantillon 62.
Une illustration de ce type de disposition est donnée par la figure 6.

En tout état de cause suivant une application privilégiée de l'invention, l'ensemble optique 61 ne sera pas orienté de telle manière que la normale moyenne à la surface utile de l'ensemble optique 61 soit sensiblement perpendiculaire à la surface de l'échantillon 62 si on considère une incidence rasante (la dispersion d'angles d'incidence sur l'échantillon 62 correspondrait alors sensiblement à la dispersion angulaire du faisceau X2 suivant la direction méridionale).

Suivant la deuxième dimension de l'ensemble optique, c'est à dire la direction méridionale, l'ensemble optique permet de collecter un flux important et selon une application privilégiée, la dispersion angulaire du faisceau X2 réfléchi est de l'ordre de 1° suivant cette direction méridionale (direction X sur la figure 4).

L'ensemble optique 61 permet donc d'obtenir une dispersion d'angle d'incidences élevée au niveau de l'échantillon tout en conditionnant un maximum de flux au niveau de l'échantillon.

On remarquera que par rapport à une configuration dans laquelle on utiliserait comme ensemble optique produisant un effet bidimensionnel un ensemble optique de type KB en regard, l'invention permet de réaliser des dispositifs plus compacts.

L'ensemble optique 61 permet en effet d'obtenir pour une longueur donnée (selon la direction méridionale) une surface de collection qui est plus grande suivant la direction sagittale que ce que l'on obtiendrait avec une configuration mettant en oeuvre un conditionnement par une optique de type KB.

Ainsi, dans le cas de l'invention la dispersion angulaire du faisceau traité par la surface utile de l'ensemble optique est plus élevée suivant la direction sagittale, et on obtient une dispersion angulaire élevée sur l'échantillon.

A titre d'illustration et en référence aux figures 5a et 6a, l'obtention d'une dispersion angulaire équivalente avec des ensembles optiques de type KB nécessiterait l'allongement de l'ensemble optique suivant la direction Y.

Dans le cas des éléments optiques de type KB, tout rayon incident doit en effet frapper l'ensemble optique dans une zone particulière (correspondant aux zones hachurées des miroirs des figures 5a et 6a) pour subir une double réflexion.

Il en résulte donc que pour un tel type connu d'élément optique, l'angle solide pouvant être collecté est limité par la longueur de l'ensemble optique.

Et ceci est vrai aussi bien pour les directions transverses horizontales que pour les directions transverses verticales (respectivement direction Z ou direction X sur les figures 5a et 6a).

Dans le cas de l'invention, il est donc possible d'augmenter la surface utile de collection suivant la direction sagittale, sans augmenter la longueur du dispositif.

Ceci est important notamment dans le cas où on souhaite limiter l'encombrement et donc la taille de l'optique, comme cela est le cas dans le domaine d'application de l'invention.

A titre d'exemple, dans le cas où l'ensemble optique 61 a une géométrie de surface toroïdale, la surface utile de collection du miroir suivant la dimension sagittale peut décrire une portion telle qu'un quart ou même un demi-cercle, ce qui correspond à un angle de capture au niveau de l'échantillon suivant la dimension sagittale qui est important.

La possibilité pour l'ensemble optique 61 d'augmenter la surface utile de collection suivant la direction sagittale est due au fait que l'angle d'incidence sur l'optique des rayons-X issus d'un même point-source varie très peu suivant cette direction (direction Y sur la figure 4).

## Revendications

1. Ensemble optique réflectif multicouche (10, 20) à gradient latéral dont la surface réfléchissante est destinée à réfléchir des rayons X incidents sous faible angle d'incidence en produisant un effet optique bidimensionnel, ladite surface réfléchissante étant constituée d'une surface unique conformée selon deux courbures correspondant à deux directions différentes, lesdites directions différentes correspondant respectivement à la direction sagittale et à la direction méridionale des rayons X incidents, **caractérisé en ce que** la surface réfléchissante a un rayon de courbure sagittale inférieur à 20 mm.

2. Ensemble optique selon la revendication précédente **caractérisé en ce que** la surface réfléchissante est définie par une structure multicouche formée sur un substrat qui présente une rugosité de surface inférieure à 10 angströms rms.

3. Ensemble optique selon la revendication précédente **caractérisé en ce que** le gradient latéral s'étend selon la direction méridionale des rayons X incidents.

4. Ensemble optique selon l'une des revendications précédentes **caractérisé en ce que** la surface réfléchissante est régulière.

5. Ensemble optique selon l'une des revendications précédentes **caractérisé en ce que** l'effet optique bidimensionnel est obtenu par une réflexion unique des rayons incidents sur l'ensemble optique.

6. Ensemble optique selon l'une des revendications précédentes **caractérisé en ce que** le multicouche est un multicouche à gradient en profondeur.

7. Ensemble optique selon l'une des revendications précédentes **caractérisé en ce que** ladite surface réfléchissante est adaptée pour réfléchir des rayons des raies Cu-K α.

8. Ensemble optique selon l'une des revendications précédentes **caractérisé en ce que** une première desdites deux courbures définit un cercle.

9. Ensemble optique selon l'une des revendications 1 à 7 **caractérisé en ce que** une première desdites deux courbures définit une courbe différente d'un cercle.

10. Ensemble optique selon la revendication précédente **caractérisé en ce que** une première desdites deux courbures définit une ellipse ou une parabole.

11. Ensemble optique selon l'une des revendications 1 à 7 **caractérisé en ce que** une première desdites deux courbures définit une courbe ouverte ou fermée différente d'un cercle, d'une ellipse ou d'une parabole.

12. Ensemble optique selon l'une des quatre revendications précédentes **caractérisé en ce que** la seconde desdites deux courbures définit un cercle.

13. Ensemble optique selon l'une des revendications 1 à 11 **caractérisé en ce que** la seconde desdites deux courbures définit une courbe différente d'un cercle.

14. Ensemble optique selon la revendication précédente **caractérisé en ce que** la seconde desdites deux courbures définit une ellipse ou une parabole.

15. Ensemble optique selon l'une des revendications 1 à 11 **caractérisé en ce que** la seconde desdites deux courbures définit une courbe ouverte ou fermée différente d'un cercle, d'une ellipse ou d'une parabole.

16. Ensemble optique selon l'une des revendications 1 à 7 **caractérisé en ce que** la surface réfléchissante a une géométrie de forme sensiblement toroïdale.

17. Ensemble optique selon l'une des revendications 1 à 7 **caractérisé en ce que** la surface réfléchissante a une géométrie de forme sensiblement paraboloïdale.

18. Ensemble optique selon l'une des revendications 1 à 7 **caractérisé en ce que** la surface réfléchissante a une géométrie de forme sensiblement ellipsoïdale.

19. Ensemble optique selon l'une des revendications 1 à 7 **caractérisé en ce que** la surface réfléchissante a une géométrie de forme sensiblement circulaire selon une première direction, et elliptique ou parabolique selon une deuxième direction.

20. Ensemble optique selon l'une des revendications précédentes **caractérisé en ce que** une fenêtre opaque aux rayons X et comportant une ouverture est associée en entrée et/ou en sortie d'ensemble optique, pour contrôler le flux d'entrée et/ou de sortie de l'ensemble optique.

21. Ensemble optique selon la revendication précédente **caractérisé en ce que** les fenêtres sont amovibles.

22. Ensemble optique selon l'une des deux revendications précédentes **caractérisé en ce que** l'ensemble comporte une ouverture en entrée et la taille et la forme de ladite ouverture en entrée peuvent être ajustées pour contrôler le flux incident.

23. Ensemble optique selon l'une des trois revendications précédentes **caractérisé en ce que** l'ensemble comporte une ouverture en sortie et la taille et la forme de ladite ouverture en sortie peuvent être ajustées pour contrôler le rayonnement réfléchi.

24. Ensemble optique selon l'une des revendications 21 à 22 **caractérisé en ce que** les ouvertures des fenêtres sont dimensionnées pour réaliser un compromis flux/divergence du rayonnement.

25. Dispositif de génération et de conditionnement de rayons-X pour des applications analytiques de rayons X comprenant un ensemble optique selon l'une des revendications 1 à 24 couplé à une source rayons-X, **caractérisé en ce que** les rayons-X émis par la source sont conditionnés en deux dimensions en un point de focalisation, la distance entre la source rayons-X et le point de focalisation étant inférieure à 90 cm.

26. Dispositif selon la revendication précédente pour des applications de réflectométrie RX dispersive en angle, **caractérisé en ce que** le faisceau émis par la source est adapté à destination d'un échantillon, les rayons-X ayant des angles d'incidences différents sur l'échantillon considéré.

27. Dispositif selon la revendication précédente **caractérisé en ce que** la dispersion d'angle d'incidences sur l'échantillon correspond sensiblement à la dispersion angulaire suivant la dimension sagittale du faisceau réfléchi par l'ensemble optique.

28. Dispositif selon l'une des deux revendications précédentes **caractérisé en ce que** l'optique est orientée vis à vis de l'échantillon de telle manière que la normale au centre de l'ensemble optique soit sensiblement parallèle à la surface de l'échantillon.

29. Dispositif selon l'une des trois revendications précédentes, **caractérisé en ce que** l'angle de capture au niveau de l'échantillon est supérieur à 2° suivant une première dimension correspondant à la dimension sagittale de l'ensemble optique et de l'ordre de 1° suivant une deuxième dimension correspondant à la dimension méridionale de l'ensemble optique, l'ensemble optique étant positionné de telle manière que la dispersion en angles d'incidence des rayons-X sur l'échantillon est supérieure à 2°, l'échantillon étant placé à une distance supérieure à 15 cm par rapport à l'ensemble optique.
